# EUROPEAN PATENT APPLICATION

(11) **EP 1 724 524 A2**
(43) Date of publication of application: **22.11.2006**
(21) Application number: 06251460.9
(22) Date of filing: 20.03.2006
(51) Int. Cl.: F23C 3/00

(54) **Reduced NOx emission method of combustion**

(30) Priority: 29.04.2005 US 675975; 17.11.2005 US 281286
(71) Applicant: Hauck Manufacturing company, Pennsylvania (US)
(72) Inventor: Feese, James J, Elizabethtown, PA 17022 (US); Gatto, Benjamin, Pennsylvania 17087 (US); Lisin, Felix, Pennsylvania 17033 (US)
(74) Representative: Price, Nigel John King

(57) **Abstract**

The present invention is a method for achieving low NOₓ single-stage combustion. A high velocity burner (100) is run normally, with combustion occurring within both the burner combustion chamber (170) and furnace chamber (205), until the gases within the furnace exceed the auto-ignition temperature of the gaseous fuel (215). The gaseous fuel is then shut off until the temperature within the burner combustion chamber drops below the auto-ignition temperature of the gaseous fuel. The gaseous fuel is then turned back on and the gaseous fuel auto ignites within the furnace chamber. The combustion then occurs only within the furnace chamber and not in the burner combustion chamber.

## Description

### CROSS-REFERENCE TO RELATED APPLICATIONS

This application claims the benefit of U.S. Provisional Application No. 60/675,975 filed April 29, 2005, which application is hereby incorporated by reference in its entirety.

### FIELD OF THE INVENTION

The present invention is generally directed to a method of combustion and specifically directed to a low nitrogen oxide method of combustion.

### BACKGROUND OF THE INVENTION

One of the by-products created by the combustion of hydrocarbon (HC) fuels in burners that use atmospheric air is nitrogen oxide (NOₓ). A well-known problem in the industry for many years with the use of conventional burner designs utilizing preheated combustion air is higher flame temperatures which in turn contribute to an exponential increase in NOₓ emissions. Efforts to save fuel and increase combustion efficiency via recuperative and/or regenerative combustion systems combined with increasingly strict governmental regulations to achieve acceptable NOₓ emissions from furnaces has led to a much greater awareness and need to solve this problem in recent years. Ideally, the only by-products of stoichiometric hydrocarbon combustion should be water (H₂O), carbon dioxide (CO₂), and nitrogen (N₂) with no carbon monoxide (CO), unburned hydrocarbons (HCs), or NOₓ emissions.

Techniques for controlling and inhibiting NOₓ formation in furnace combustion processes are well known and may include, for example, provisions for staging fuel, staging combustion air, recirculating flue gas into the burner, recirculating flue gas into the burner flame, altering combustion patterns with different degrees of swirl, and injection of water or steam into the burner or flame. Factors that contribute to the formation of NOₓ in burner-fired combustion chambers are the oxygen content of the flame or combustion chamber, the temperature of the combustion chamber, the temperature of the combustion air, the burner-firing rate, turbulence, and the residence time for complete combustion. However, these factors are difficult to predict because burners for different industrial processes must operate at various furnace chamber temperatures, have various oxygen concentrations in the work chambers, may or may not have preheated combustion air, and are required to operate at different heat inputs depending on changing heat load requirements.

Previous efforts to solve the problem include the Staged Air, Low NOₓ Burner with Internal Recuperative Flue Gas Recirculation, disclosed in U.S. Patent No. 5,413,477. This design utilizes a combination of air staging and flue gas recirculation (FGR) for NOₓ reduction. However, the added capital expense for piping and controlling the recirculated flue gases are substantial.

What is needed is a method that can be used with existing burners to reduce NOₓ emissions in high velocity burners that are capable of reduced NOₓ emissions when fired on either ambient or preheated combustion air.

### SUMMARY OF THE INVENTION

An embodiment of the present invention is a method for achieving low NOₓ single-stage combustion comprising providing a burner, the burner comprising a combustion chamber disposed within the burner, the combustion chamber being in fluid communication with a combustion air supply, a gaseous fuel supply, a furnace chamber, and a flame stabilizer nested within the burner, the flame stabilizer being in fluid communication with the combustion chamber, a combustion air supply, and a gaseous fuel supply. The method further comprises flowing the combustion air into the combustion chamber and flowing gaseous fuel into the combustion chamber. The method further comprises mixing the gaseous fuel with the combustion air within the combustion chamber, forming a fuel/air mixture. The method further comprises flowing the fuel/air mixture from the combustion chamber into the furnace chamber through a high velocity exit nozzle. The method further comprises igniting the fuel/air mixture within the combustion chamber to form a flame, the flame being stabilized by the flame stabilizer. The method further comprises combusting the fuel/air mixture, the combustion occurring in the combustion chamber, and in the furnace chamber, the combustion forming hot gases of combustion, hot gases of combustion produced in the combustion chamber flowing into the furnace chamber through the high velocity exit nozzle. The method further comprises continuing to combust the fuel/air mixture for a first preselected period of time until attaining a first preselected temperature of gases within the furnace sufficient to auto ignite the fuel. The method further comprises ceasing to provide gaseous fuel, causing combustion of the fuel/air mixture to cease. The method further comprises waiting for a second preselected period of time until the burner combustion chamber cools to below the auto-ignition temperature of the fuel, wherein the furnace gases remain sufficiently hot to auto ignite the fuel. The method further comprises restarting the provision of gaseous fuel, causing the auto-ignition of the fuel/air mixture solely within the furnace chamber, without igniting the fuel/air mixture in the burner combustion chamber, an exit velocity of the fuel/air mixture through the high velocity exit nozzle being sufficiently high to prevent flashback of flame into the burner combustion chamber.

Another embodiment of the present invention is a method for achieving low NOₓ single-stage combustion comprising providing a burner, wherein the burner is at least partially self-recuperative, the burner comprising a combustion chamber disposed within the burner, the combustion chamber being in fluid communication with a combustion air supply, a gaseous fuel supply, a furnace chamber, and a flame stabilizer nested within the burner, the flame stabilizer being in fluid communication with the combustion chamber, a combustion air supply, and a gaseous fuel supply, and an exhaust housing, the exhaust housing being in fluid communication with the furnace chamber and an exhaust air outlet passage. The method further comprises flowing the combustion air into the combustion chamber and flowing gaseous fuel into the combustion chamber. The method further comprises mixing the gaseous fuel with the combustion air within the combustion chamber, forming a fuel/air mixture. The method further comprises flowing the fuel/air mixture from the combustion chamber into the furnace chamber through a high velocity exit nozzle. The method further comprises igniting the fuel/air mixture within the combustion chamber to form a flame, the flame being stabilized by the flame stabilizer. The method further comprises combusting the fuel/air mixture, the combustion occurring in the combustion chamber, and in the furnace chamber, the combustion forming hot gases of combustion, hot gases of combustion produced in the combustion chamber flowing into the furnace chamber through the high velocity exit nozzle, the hot gases of combustion flowing back into the exhaust housing and out of the burner through the exhaust air outlet passage. The method further comprises continuing to combust the fuel/air mixture for a first preselected period of time until attaining a first preselected temperature of gases within the furnace sufficient to auto ignite the fuel. The method further comprises ceasing to provide gaseous fuel, causing combustion of the fuel/air mixture to cease. The method further comprises waiting for a second preselected period of time until the burner combustion chamber cools to below the auto-ignition temperature of the fuel, wherein the furnace gases remain sufficiently hot to auto ignite the fuel. The method further comprises restarting the provision of gaseous fuel, causing the auto-ignition of the fuel/air mixture solely within the furnace chamber, without igniting the fuel/air mixture in the burner combustion chamber, an exit velocity of the fuel/air mixture through the high velocity exit nozzle being sufficiently high to prevent flashback of flame into the burner combustion chamber.

An advantage of the present invention is that it provides a method for use with a currently installed high velocity gaseous fuel burner capable of lowering NOₓ emissions without altering the burner.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is an end view of a prior art exemplary high velocity burner used with the method of the present invention.

FIG. 2 is a partial cross-sectional view of a prior art exemplary high velocity burner taken along line 2-2 of FIG. 1.

FIG. 3 is a partial cross-sectional view of an exemplary prior art high velocity burner showing the normal prior art combustion mode, which is also the first combustion mode of the present invention taken along line 2-2 of FIG. 1.

FIG. 4 is a cross-sectional view of an exemplary high velocity burner showing the lower NOₓ second combustion mode of the present invention also taken along line 2-2 of FIG. 1.

FIG. 5 is an end view of a prior art exemplary self-recuperative high velocity burner used with the method of the present invention.

FIG. 6 is a partial cross-sectional view of a prior art exemplary self-recuperative high velocity burner taken along line 6-6 of FIG. 5.

FIG. 7 is a partial cross-sectional view of an exemplary self-recuperative prior art high velocity burner showing the normal prior art combustion mode, which is also the first combustion mode of the present invention taken along line 6-6 of FIG. 5.

FIG. 8 is a partial cross-sectional view of an exemplary self-recuperative high velocity burner showing the lower NOₓ second combustion mode of the present invention also taken along line 6-6 of FIG. 5.

Wherever possible, the same reference numbers will be used throughout the drawings to refer to the same or like parts.

### DETAILED DESCRIPTION OF THE INVENTION

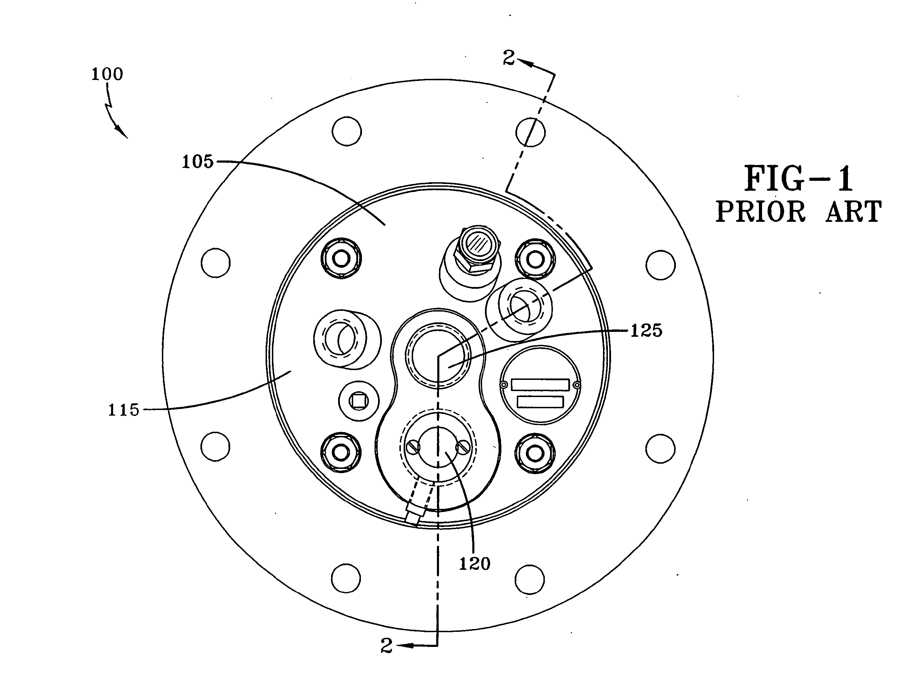

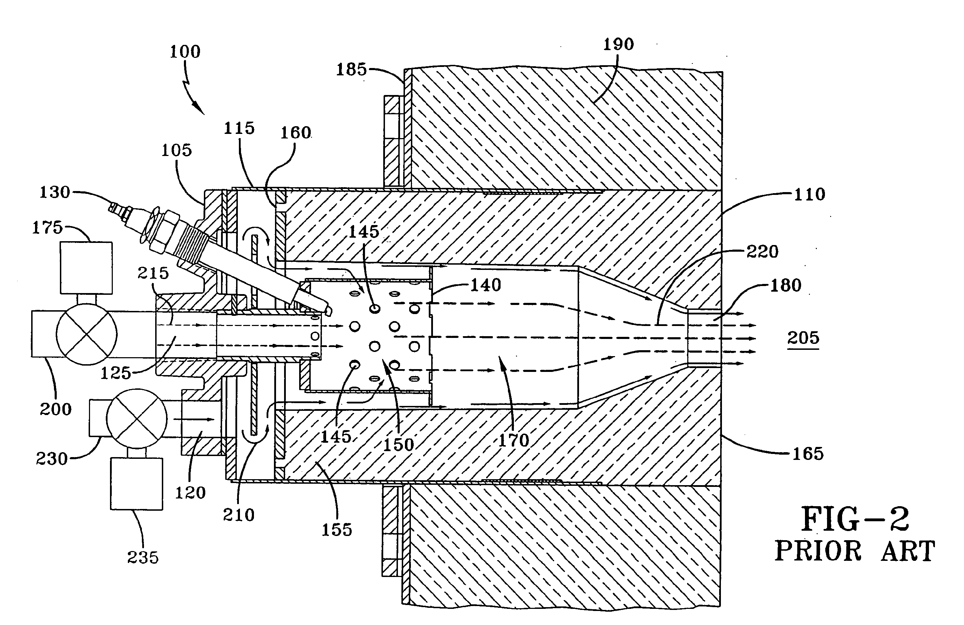

FIG. 1 depicts an end view of an exemplary prior art high velocity burner 100 designed for firing on gaseous fuel, while FIG. 2 depicts a cross-sectional view of the prior art burner of FIG. 1 taken along line 2-2. The high-velocity burner 100 has an upstream end 105 and a downstream end 110. Additionally, the burner 100 has a main burner body 115, with a combustion air inlet passage 120 and a gaseous fuel inlet passage 125 located within the main burner body 115. A flame igniter 130 and flame detector (not shown) are disposed in the main burner body 115. The main burner body 115 also has a flame stabilizer 140 disposed within the body 115, the flame stabilizer 140 having a structural element that functions as a means of mixing fuel and air, such as, for example, apertures 145, and a flame stabilizer chamber 150 disposed within the flame stabilizer 140. Attached to the main burner body 115 is burner tile 155, having an upstream end 160 and a downstream end 165. The burner tile 155 preferably comprises a material selected from the group consisting of ceramic and metal capable of withstanding high temperatures. A combustion chamber 170 is located within the burner tile 155. The burner 100 extends through a furnace shell 185 and a furnace wall 190 to a furnace chamber 205. A high velocity exit nozzle 180 fluidly connects the combustion chamber 170 and the furnace chamber 205. The burner tile 155 extends through the furnace shell 185 and furnace wall 190.

The gaseous fuel inlet passage 125 is connected to a gaseous fuel supply (not shown). The gaseous fuel may be any gaseous fuel known in the art, such as, for example, natural gas, methane, coke oven gas(es), blast furnace gas(es), and combinations thereof. The gaseous fuel inlet passage 125 is in fluid communication with the combustion chamber 170. The combustion air inlet passage 120 is connected to a combustion air supply (not shown). The combustion air inlet passage 120 is in fluid communication with the combustion chamber 170.

An embodiment of the method of the present invention has two combustion modes, a first higher NOₓ combustion mode and a second reduced NOₓ combustion mode. In the first combustion mode, combustion air is first provided to the burner 100 from the combustion air supply (not shown) and gaseous fuel is provided to the burner 100 from the gaseous fuel supply (not shown). The main combustion air flows into and through the combustion air inlet passage 120. As shown by combustion airflow arrows 210, the combustion air flows directly into the combustion chamber 170. The combustion air is preferably provided at a static air inlet pressure in the range of about 8 ounces per square inch gauge (osig) to about 20 osig. The gaseous fuel flows directly into the combustion chamber 170 as shown by gaseous fuel flow arrows 215.

In the combustion chamber 170, the gaseous fuel 215 mixes with the combustion air 210, forming a fuel/air mixture. As shown by fuel/air mixture flow arrows 220, the fuel/air mixture flows from the combustion chamber 170, through the high velocity exit nozzle 180, and into the furnace chamber 205.

In a preferred embodiment, the combustion air 210 and gaseous fuel 215 flows are provided at room temperature. Optionally, the combustion air may be preheated to a temperature up to about 1000°F as known in the art. The burner can be fired providing an amount of air in excess of the amount required to combust the gaseous fuel, preferably an excess in the range of about 0% to about 30%. The burner may also be fired providing an amount of fuel in excess of the amount of air available to combust the fuel, preferably excess fuel in the range of about 0% to about 10%.

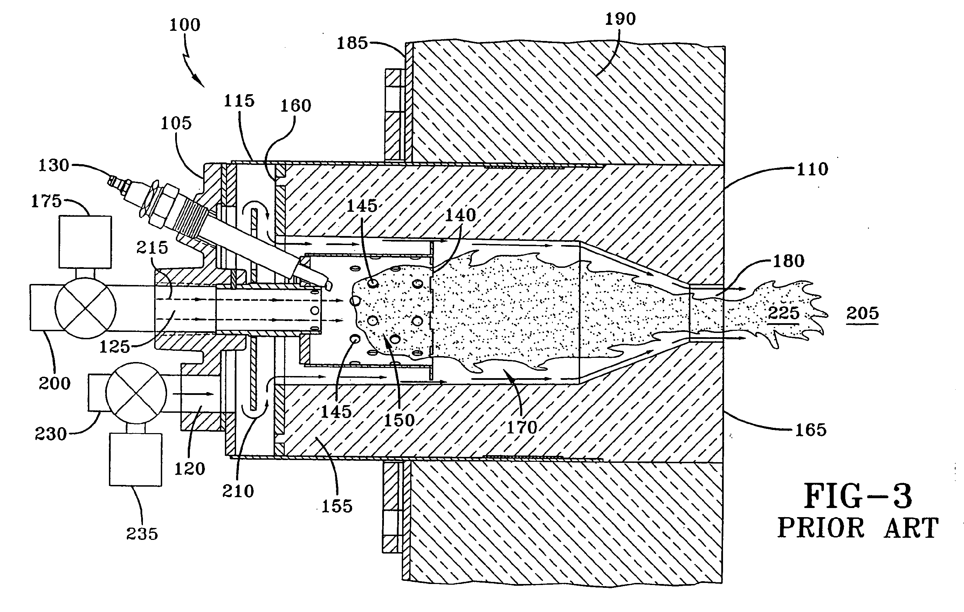

Once both the combustion air 210 and the gaseous fuel 215 are flowing through the burner 100, the flame igniter 130 is used to ignite a first combustion mode flame 225, shown in FIG. 3, within the combustion chamber 170. Upon ignition, the first combustion mode flame 225 is stabilized by flame stabilizer 140 and spreads through combustion chamber 170 and into the furnace chamber 205. The first combustion mode is continued for a first preselected period of time until the temperature within the furnace chamber 205 rises above the auto-ignition temperature of the gaseous fuel such that the fuel/air mixture can auto ignite upon entry into the furnace chamber 205.

Once the temperature of the gases within the furnace exceeds the auto-ignition temperature of the gaseous fuel, the supply of gaseous fuel is shut off, causing the combustion of the fuel/air mixture to cease. For example, if natural gas, with an auto-ignition temperature of about 1400°F is used, then the supply of natural gas may be shut off after the gases within the furnace chamber 205 have exceeded about 1400°F. Such inactivation of the flow of gaseous fuel 215 may be accomplished by any means known in the art, such as, for example, using a control panel (not shown) to activate a solenoid valve 175, where the solenoid valve 175 controls the flow of gaseous fuel 215 through a gaseous fuel line 200 that connects the gaseous fuel supply to the gaseous fuel inlet passage 125. Any functional valve known in the art may be used, such as for example a butterfly valve, etc. The first combustion mode may be run for any first preselected period of time sufficient to cause the hot gases within the furnace chamber 205 to exceed the auto-ignition temperature of the gaseous fuel 215. The preselected time for the first combustion mode may exceed the time necessary for the hot gases within the furnace chamber 205 to exceed the auto-ignition temperature of the fuel.

Optionally, once the temperature of the gases within the furnace exceeds the auto-ignition temperature of the gaseous fuel, the supply of combustion air 210 may be shut off in addition to the gaseous fuel 215 being shut off. Such inactivation of the flow of combustion air 210 may be accomplished by any means known in the art, such as, for example, using a control panel (not shown) to activate a butterfly valve 235 where the butterfly valve 235 controls the flow of gaseous fuel 215 through a combustion air line 230 that connects the combustion air supply to the combustion air inlet passage 120. Any functional valve known in the art may be used, such as; for example, a solenoid valve, etc.

During the first combustion mode, the temperature of portions of the combustion chamber 170 are heated to a temperature above the auto-ignition temperature of the gaseous fuel 215, such that resuming a flow of the gaseous fuel immediately after terminating flow of the gaseous fuel would cause the gaseous fuel to reignite within the combustion chamber 170. After a second preselected period of time, the second preselected period of time being sufficient to ensure that no auto-ignition of the air/fuel mixture 220 will occur within the combustion chamber 170, the flow of gaseous fuel 215 is resumed. The second preselected period of time cannot be so long so that the temperature of the hot gases within the furnace chamber 205 fall below the auto-ignition temperature of the fuel 215. The gases within the furnace chamber 205 must be maintained at or above a temperature sufficient to auto ignite the fuel 215. Such activation of the flow of gaseous fuel 215 may be accomplished by any means known in the art, such as, for example, using the control panel to inactivate the solenoid valve 175, where the solenoid valve 175 controls the flow of gaseous fuel 215 through a gaseous fuel line 200 that connects the gaseous fuel supply to the gaseous fuel inlet passage 125.

Optionally, if the supply of combustion air 210 was shut off as well, the combustion air 210 is activated as well as the gaseous fuel 215. Such activation of the flow of combustion air 210 may be accomplished by any means known in the art, such as, for example, using the control panel to again activate the butterfly valve 235, where the butterfly valve 235 controls the flow of combustion air 210 through the combustion air line 230 that connects the combustion air supply to the combustion air inlet passage 120.

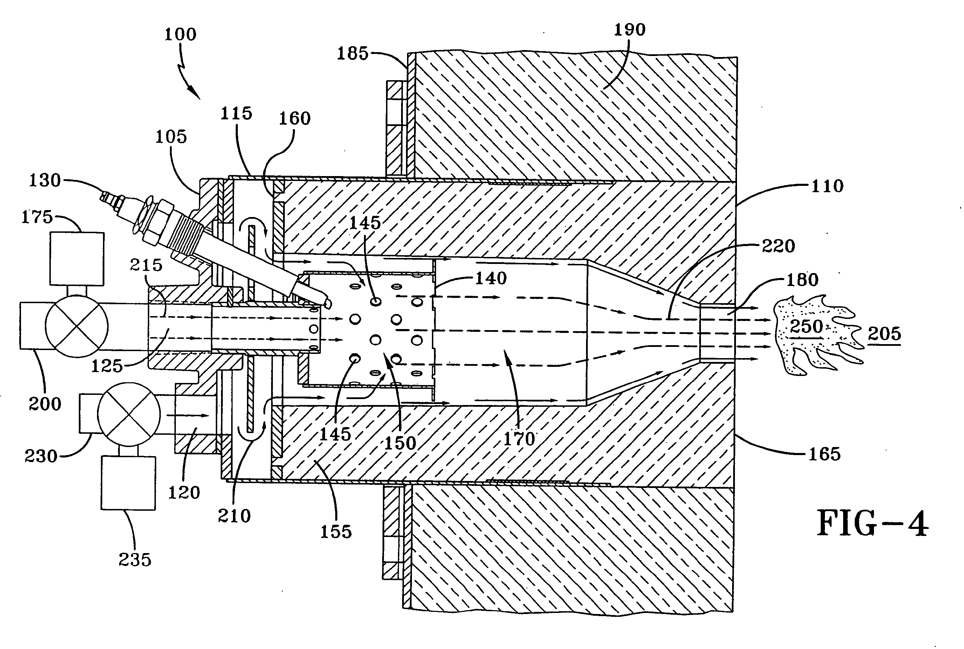

Once the flow of gaseous fuel 215 is resumed, the gaseous fuel 215 flows into the combustion chamber 170 and mixes with the combustion air 210 without igniting. Optionally, if the flow of combustion air was shut off as well, the flow of combustion air 210 is resumed as well, the combustion air flows into the combustion chamber 170 and mixes with the gaseous fuel 215 without igniting. The fuel/air mixture 220 flows through the combustion chamber 170 and into the furnace chamber 205 through the high velocity exit nozzle 180. Once in the furnace chamber 205, the fuel/air 220 mixture auto ignites, initiating the second combustion mode, shown in FIG. 4. During the second combustion mode, combustion only occurs within the furnace chamber 205. Because of the high velocity of the fuel/air mixture 220 flowing out of the high velocity exit nozzle 180, the second combustion mode flame 250, which is now substantially invisible to the naked eye, does not propagate back through the high velocity exit nozzle 180. The amount of NOₓ generated by the second combustion mode is lower than the amount of NOₓ generated by the first combustion mode by about 50 percent or more. High velocity burners may be fired in any position or orientation, so such burners may be installed in the roof, walls, or floor of a furnace.

The burner 100 of the present invention may be any high velocity burner known in the art as long as a mixture of combustion air and gaseous fuel exits the burner at a speed sufficient to prevent a flame 250 that exists solely within the furnace chamber 205 from re-entering the burner.

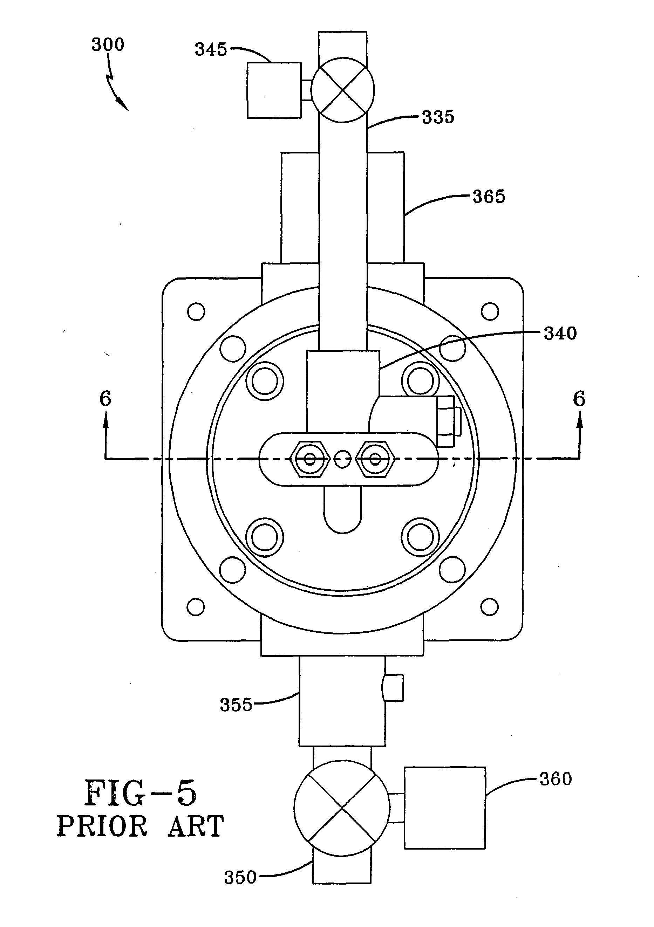

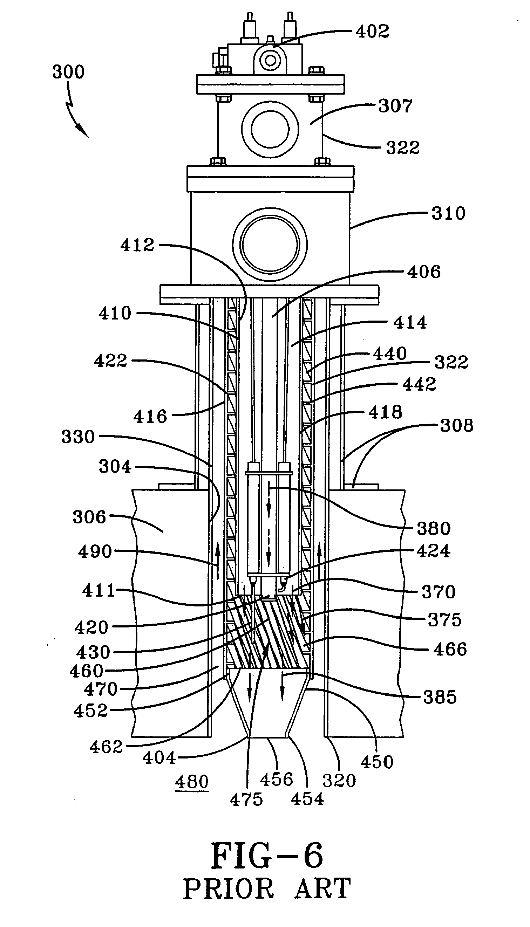

FIG. 5 depicts an end view of an exemplary self-recuperative high velocity burner 300 designed for firing on gaseous fuel and designed for direct furnace heating, while FIG. 6 depicts a cross-sectional view of the self-recuperative prior art high velocity burner of FIG. 5 taken along line 6-6. Self-recuperative burners require an effective built-in heat exchange to transfer heat which is otherwise lost as waste from the exhaust gas to the incoming combustion air. Referring now to FIG. 5 and FIG. 6, the self-recuperative burner 300 comprises an exhaust housing 330 and a main burner assembly 322. The exhaust housing 330 extends from a first end 310 to a second end 320. Housing 330 extends through an aperture 304 in a furnace wall 306. A support structure 308 extends between the first end 310 of housing 330 and the furnace wall 306 and support structure 308 firmly attaches and stabilizes burner 300 to furnace wall 306. The main burner assembly 322 nests within the exhaust housing 330 and extends from the air inlet housing 307 to the second end 454 of the discharge nozzle 450. Additionally, the self-recuperative burner 300 has a gaseous fuel inlet passage 340, a combustion air inlet passage 355 and an exhaust air outlet passage 365.

The main burner assembly 322 comprises an air inlet housing 307, a primary air passage 414, a secondary air passage 440, a flame stabilizer 460 for flame stabilization, a combustion chamber 475, and a discharge nozzle 450. The flame stabilizer 460 comprises, for example, flame stabilizer vanes 466. The flame stabilizer vanes 466 begin at the end 411 of the primary air tube 410. The flame stabilizer vanes 466 extend to the first end 452 of the discharge nozzle 450. The combustion chamber 475 includes the flame stabilizer 460 and begins at the end 411 of the primary air tube 410 and extends to the second end 454 of the discharge nozzle 450. The primary air tube 410 surrounds fuel tube 406. Fuel tube 406 extends from end 402 to the fuel tube apertures 420. Primary air passageway 414 is formed between fuel tube 406 and inner diameter 412 of primary air tube 410. A secondary air passageway 440 has its inner diameter 418 on primary air tube 410 and an outer diameter 416 and extends from air inlet housing 307 to the flame stabilizer vanes 460.

Fuel is provided to fuel tube 406 by means of the gaseous fuel inlet passage 340 that is connected to a gaseous fuel line 335, which is connected to a fuel supply (not shown) at end 402 of fuel tube 406. Combustion air, which is split into primary combustion air and secondary combustion air in the main burner assembly 322, is provided to the main burner assembly 322 by means of the combustion air inlet passage 355, which is connected to a combustion air line 350 that is connected to a combustion air supply (not shown). Primary air passageway 414 supplies primary combustion air to mix with fuel from fuel tube 406. The combustion air is preferably provided at a static air inlet pressure in the range of about 8 osig to about 20 osig. The flow of primary combustion air is shown by arrows 370. The flow of secondary combustion air is shown by arrows 375. The flow of gaseous fuel is shown by arrows 380. Primary air tube 410 terminates at combustion chamber 475. A secondary air tube 422 has an outside diameter 416 surrounding primary air tube 410 and extends to the flame stabilizer vanes 466. Secondary air tube 422 includes a plurality of secondary air passageways 440 that extend along its length. These secondary air passageways 440 are formed by helical walls 442 that extend inward from tube 422. The radial inward boundary of these passageways 440 is the outer diameter of primary air tube 410. Secondary air 375 is introduced into the secondary air tube 422 at air inlet housing 307.

Fuel tube 406 terminates at the combustion chamber 475 just beyond primary air tube 410. Fuel tube 406 includes a plurality of apertures 420 having at least a partial radial orientation to form a nozzle that distributes fuel at least partially radially outward from the fuel tube 406. A flame igniter 424 is positioned proximate to fuel tube apertures 420. A flame sensor 430, also disposed proximate to fuel tube apertures 420, extends beyond the termination of tube 410.

At the end 462 of flame stabilizer 460 is a conically-shaped high velocity exit nozzle 450 to discharge the flame. Nozzle 450 has a first end 452 that is received within tube 422 and a second end 454 with aperture 456 to direct the flame into furnace chamber 480. The flow of the air and fuel mixture through combustion chamber 475 is shown by arrows 385.

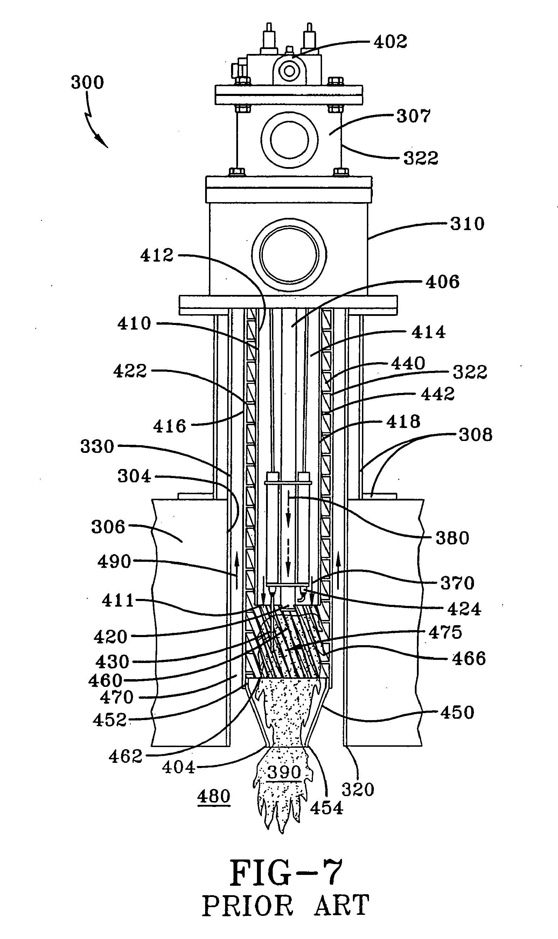

Once both the combustion air 370, 375 and the gaseous fuel 380 are flowing into the combustion chamber 475, the flame igniter 424 is used to ignite a first combustion mode flame 390, shown in FIG. 7, within the combustion chamber 475. Upon ignition, the first combustion mode flame 390 is stabilized by flame stabilizer 460 and exits through the nozzle 450 and into the furnace chamber 480. Exhaust gases are drawn back into an exhaust passageway 470 within the exhaust gas housing 330 as shown by arrows 490 and out of the burner 300 through the exhaust air outlet passage 365.

Once the temperature of the gases within the furnace exceeds the auto-ignition temperature of the gaseous fuel, the supply of gaseous fuel 380 is shut off, causing the combustion of the fuel/air mixture to cease. For example, if natural gas, with an auto-ignition temperature of about 1400°F is used, then the supply of natural gas may be shut off after the gases within the furnace chamber 480 have exceeded about 1400°F. Such inactivation of the flow of gaseous fuel may be accomplished by any means known in the art, such as, for example, using a control panel (not shown) to activate a solenoid valve 345, where the solenoid valve 345 controls the flow of gaseous fuel 380 through a gaseous fuel line 335 that connects the gaseous fuel supply to the gaseous fuel inlet passage 340. Any functional valve known in the art may be used, such as, for example, a butterfly valve, etc. The first combustion mode may be run for any first preselected period of time sufficient to cause the hot gases within the furnace chamber 480 to exceed the auto-ignition temperature of the gaseous fuel. The preselected time for the first combustion mode may exceed the time necessary for the hot gases within the furnace chamber 480 to exceed the auto-ignition temperature of the fuel.

Optionally, once the temperature of the gases within the furnace chamber 480 exceeds the auto-ignition temperature of the gaseous fuel 380, the supply of combustion air 370, 375 may be shut off in addition to the gaseous fuel being shut off. Such inactivation of the flow of combustion air 370, 375 may be accomplished by any means known in the art, such as, for example, using a control panel (not shown) to activate a butterfly valve 360 where the butterfly valve 360 controls the flow of combustion air through a combustion air line 350 that connects the combustion air supply to the combustion air inlet passage 355. Any functional valve known in the art may be used, such as, for example, a solenoid valve, etc.

During the first combustion mode, the temperature of portions of the combustion chamber 475 are heated to a temperature above the auto-ignition temperature of the gaseous fuel 380, such that resuming a flow of the gaseous fuel immediately after terminating flow of the gaseous fuel would cause the gaseous fuel to reignite within the combustion chamber 475. After a second preselected period of time, the second preselected period of time being sufficient to ensure that no auto-ignition of the air/fuel mixture 385 will occur within the combustion chamber 475, the flow of gaseous fuel 380, and optionally the combustion air 370, 375 as well, is resumed. The second preselected period of time cannot be so long so that the temperature of the hot gases within the furnace chamber 480 fall below the auto-ignition temperature of the fuel 380. The gases within the furnace chamber 480 must be maintained at or above a temperature sufficient to auto ignite the fuel 380. Such activation of the flow of gaseous fuel 380 may be accomplished by any means known in the art, such as, for example, using the control panel to inactivate the solenoid valve 345, where the solenoid valve controls the flow of gaseous fuel 380 through a gaseous fuel line 335 that connects the gaseous fuel supply to the gaseous fuel inlet passage 340.

Optionally, if the supply of combustion air was shut off as well, the combustion air 370, 375 is activated as well as the gaseous fuel 380. Such activation of the flow of combustion air 370, 375 may be accomplished by any means known in the art, such as, for example, using the control panel to again activate the butterfly valve 360, where the butterfly valve 360 controls the flow of combustion air through the combustion air line 350 that connects the combustion air supply to the combustion air inlet passage 355.

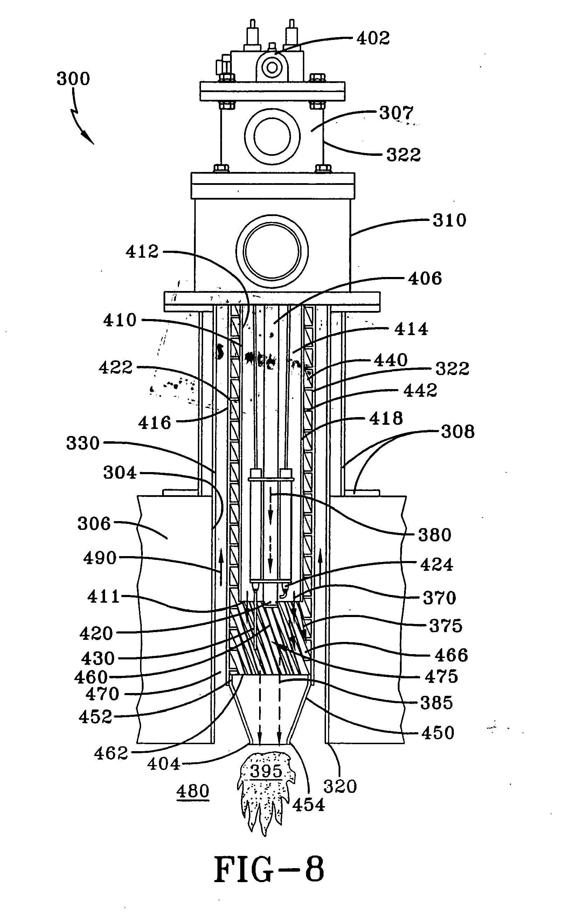

Once the flow of gaseous fuel 380 is resumed, and, if it was shut off, the combustion air 370, 375, as well, the gaseous fuel 380 mixes with the combustion air in combustion chamber 475 without igniting. The fuel/air mixture 385 flows through the burner 300 and into the furnace chamber 480 through the high velocity exit nozzle 450. Once in the furnace chamber 480, the fuel/air mixture 385 auto ignites, initiating the second combustion mode, shown in FIG. 8. During the second combustion mode, combustion only occurs within the furnace chamber 480. Because of the high velocity of the combustion air 370, 375 and the fuel/air mixture 385 flowing out of the high velocity exit nozzle 450, the second combustion mode flame 395, which is now substantially invisible to the naked eye, does not propagate back through the high velocity exit nozzle 450. The amount of NOₓ generated by the second combustion mode is lower than the amount of NOₓ generated by the first combustion mode by about 50 percent or more. High velocity burners may be fired in any position or orientation, so such burners may be installed in the roof, walls, or floor of a furnace.

The self-recuperative burner 300 of the present invention may be any self-recuperative high velocity burner known in the art as long as a mixture of combustion air and gaseous fuel exits the burner at a speed sufficient to prevent a flame 395 that exists solely within the furnace chamber 480 from re-entering the burner.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for low NOₓ combustion, comprising the steps of:
providing a burner, the burner comprising:
a combustion chamber disposed within the burner, the combustion chamber being in fluid communication with a combustion air supply, a gaseous fuel supply, and a furnace chamber; and
a flame stabilizer nested with the burner, the flame stabilizer being in fluid communication with the combustion chamber, a combustion air supply, and a gaseous fuel supply; and
flowing the combustion air into the combustion chamber;
flowing gaseous fuel into the combustion chamber;
mixing the gaseous fuel with the combustion air within the combustion chamber, forming a fuel/air mixture;
flowing the fuel/air mixture from the combustion chamber into the furnace chamber through a high velocity exit nozzle;
igniting the fuel/air mixture within the combustion chamber to form a flame, the flame being stabilized by the flame stabilizer;
combusting the fuel/air mixture, the combustion occurring in the combustion chamber, and in the furnace chamber, the combustion forming hot gases of combustion, hot gases of combustion produced in the combustion chamber flowing into the furnace chamber through the high velocity exit nozzle; then
continuing to combust the fuel/air mixture for a first preselected period of time until attaining a first preselected temperature of gases within the furnace sufficient to auto ignite the fuel; then
ceasing to provide gaseous fuel, causing combustion of the fuel/air mixture to cease; then
waiting for a second preselected period of time until the burner combustion chamber cools to a second preselected temperature below the auto-ignition temperature of the fuel, wherein the furnace gases remain sufficiently hot to auto ignite the fuel; then
restarting the provision of gaseous fuel, causing the auto-ignition of the fuel/air mixture solely within the furnace chamber, without igniting the fuel/air mixture in the burner combustion chamber, an exit velocity of the fuel/air mixture through the high velocity exit nozzle being sufficiently high to prevent flashback of flame into the burner combustion chamber.

2. The method of claim 1, wherein the combustion air is preheated to a temperature of up to about 1000°F.

3. A method for low NOₓ combustion, comprising the steps of:
providing a burner, wherein the burner is self-recuperative, the burner comprising:
a combustion chamber disposed within the burner, the combustion chamber being in fluid communication with a combustion air supply, a gaseous fuel supply, and a furnace chamber;
a flame stabilizer nested with the burner, the flame stabilizer being in fluid communication with the combustion chamber, a combustion air supply, and a gaseous fuel supply; and
an exhaust housing comprising an exhaust passageway, the exhaust passageway being in fluid communication with the furnace chamber and an exhaust air outlet passage; and
flowing the combustion air into the combustion chamber;
flowing gaseous fuel into the combustion chamber;
mixing the gaseous fuel with the combustion air within the combustion chamber, forming a fuel/air mixture;
flowing the fuel/air mixture from the combustion chamber into the furnace chamber through a high velocity exit nozzle;
igniting the fuel/air mixture within the combustion chamber to form a flame, the flame being stabilized by the flame stabilizer;
combusting the fuel/air mixture, the combustion occurring in the combustion chamber, and in the furnace chamber, the combustion forming hot gases of combustion, hot gases of combustion produced in the combustion chamber flowing into the furnace chamber through the high velocity exit nozzle, the hot gases of combustion flowing back into the exhaust passageway and out of the burner through the exhaust air outlet passage; then
continuing to combust the fuel/air mixture for a first preselected period of time until attaining a first preselected temperature of gases within the furnace sufficient to auto ignite the fuel; then
ceasing to provide gaseous fuel, causing combustion of the fuel/air mixture to cease; then
waiting for a second preselected period of time until the burner combustion chamber cools to a second preselected temperature below the auto-ignition temperature of the fuel, wherein the furnace gases remain sufficiently hot to auto ignite the fuel; then
restarting the provision of gaseous fuel, causing the auto-ignition of the fuel/air mixture solely within the furnace chamber, without igniting the fuel/air mixture in the burner combustion chamber, an exit velocity of the fuel/air mixture through the high velocity exit nozzle being sufficiently high to prevent flashback of flame into the burner combustion chamber.

4. The method of any one of the preceding claims, wherein the step of ceasing further comprises ceasing to provide combustion air and wherein the step of restarting further comprises restarting the provision of combustion air.

5. The method of claim 4, wherein the combustion chamber is connected to the combustion air supply though a combustion air line, wherein a valve is attached to the combustion air line, the valve controlling flow of combustion air through the combustion air line, and wherein the ceasing and restarting of combustion air is accomplished through the actuation of the valve.

6. The method of claim 5, wherein the valve is a butterfly valve.

7. The method of any one of the preceding claims, wherein the gaseous fuel is selected from the group consisting of natural gas, methane, coke oven gas, blast furnace gas, and combinations thereof.

8. The method of any one of the preceding claims, wherein the combustion chamber is connected to the gaseous fuel supply through a gaseous fuel line, wherein a valve is attached to the gaseous fuel line, the valve controlling flow of gaseous fuel through the gaseous fuel line, and wherein the ceasing and restarting of the gaseous fuel is accomplished through the actuation of the valve.

9. The method of claim 8, wherein the valve is a solenoid valve.

10. The method of any one of the preceding claims, wherein excess combustion air is provided in the range of about 0% excess combustion air to about 30% excess combustion air.

11. The method of any one of the preceding claims, wherein the combustion air is provided at a static air inlet pressure in the range of about 8 osig to about 20 osig.

12. The method of any one of the preceding claims, wherein excess gaseous fuel is provided in the range of about 0% excess gaseous fuel to about 10% excess gaseous fuel.
